# EUROPEAN PATENT APPLICATION

(11) **EP 4 703 537 A1**
(43) Date of publication of application: **04.03.2026**
(21) Application number: 24795837.4
(22) Date of filing: 10.04.2024
(51) Int. Cl.: E04H 4/16, B63C 11/52

(54) **WALL CLIMBING METHOD OF UNDERWATER CLEANING DEVICE AND UNDERWATER CLEANING DEVICE**

(30) Priority: 25.04.2023 CN 202310454893
(71) Applicant: Wybotics Co., Ltd, Tianjin 300462 (CN)
(72) Inventor: WANG, Youjiang, Tianjin 300462 (CN); LI, Cheng, Tianjin 300462 (CN)
(74) Representative: Epping - Hermann - Fischer
(86) International application number: PCT/CN2024/087020
(87) International publication number: WO 2024/222456

(57) **Abstract**

The present application provides a wall climbing method for an underwater cleaning device and an underwater cleaning device. When the underwater cleaning device is about to start or has started wall climbing, a forward end of the device is caused to be slightly lifted or tend to be slightly lifted.

## Description

The present application claims priority to Chinese Patent Application No. 202310454893.6, titled "WALL CLIMBING METHOD FOR UNDERWATER CLEANING DEVICE AND UNDERWATER CLEANING DEVICE" and filed on April 25, 2023, the entire contents of which are incorporated herein by reference.

### TECHNICAL FIELD

The present application relates to the technical field of pool cleaning, and particularly to a wall climbing method for an underwater cleaning device and an underwater cleaning device.

### BACKGROUND

With the development of computer technology, robot technology has also developed rapidly. For example, users can use a sweeping robot to clean the floors of their houses, a window cleaning robot to clean the windows of their houses, a pool cleaning robot to clean the pool, etc.

### SUMMARY

The present application provides a wall climbing method for an underwater cleaning device and an underwater cleaning device, which make it easier for the underwater cleaning device to climb a pool wall.

The technical solutions are as follows.

In one aspect, a wall climbing method for an underwater cleaning device is provided. When the underwater cleaning device is about to start or has started wall climbing, a forward end is caused to be slightly lifted or tend to be slightly lifted. Wherein water is discharged from a water outlet of the underwater cleaning device after being filtered by the underwater cleaning device.

In the other aspect, an underwater cleaning device is provided, which is configured to perform wall climbing using the above-mentioned wall climbing method.

By using the above-mentioned technical solutions, after the underwater cleaning device contacts the wall, the force exerted by the underwater cleaning device on the pool bottom is reduced, so that the forward end is slightly lifted or tends to be slightly lifted, so as to climb the wall.

### BRIEF DESCRIPTION OF THE DRAWINGS

To describe the technical solutions in the embodiments of the present application more clearly, the accompanying drawings used in describing the embodiments are briefly introduced below. Apparently, the accompanying drawings described below are merely some embodiments of the present application. Other drawings can be obtained from these accompanying drawings by those of ordinary skills in the art without creative efforts.
FIG. 1 is a state schematic diagram of an underwater cleaning device in a stationary state underwater according to an embodiment of the present application;
FIG. 2 is another state schematic diagram of the underwater cleaning device in a stationary state underwater according to an embodiment of the present application;
FIG. 3 is a state schematic diagram of the underwater cleaning device traveling underwater according to an embodiment of the present application;
FIG. 4 is a state schematic diagram of the underwater cleaning device at the moment of wall contact according to an embodiment of the present application;
FIG. 5 is a state schematic diagram of the underwater cleaning device in an initial wall-climbing phase according to an embodiment of the present application;
FIG. 6 is a state schematic diagram of the underwater cleaning device during wall climbing according to an embodiment of the present application;
FIG. 7 is a state schematic diagram of the underwater cleaning device fully positioned on a pool wall according to an embodiment of the present application;
FIG. 8 is a state schematic diagram of the underwater cleaning device walking underwater according to an embodiment of the present application; and
FIG. 9 is a state schematic diagram of the underwater cleaning device traveling underwater according to an embodiment of the present application (the device is provided with a buoyancy chamber).

### DETAILED DESCRIPTION

The present application will be further described below in conjunction with the accompanying drawings and specific embodiments.

The pool cleaning machine is primarily used for cleaning a pool. Cleaning is achieved by the machine traversing the pool during travel and filtering water at a position where the machine travels. Wherein the pool may be a swimming pool.

The pool cleaning machine can travel in a pool mainly because it can sink underwater due to its weight being greater than its buoyant force and then can be driven by a power unit. In practical applications, under certain scenarios (e.g., 1. when cleaning pool walls; 2. after the cleaning work is completed, the pool cleaning machine climbs the pool wall to be partially exposed above the water surface, thereby facilitating the observation and removal by the personnel beside the pool), the pool cleaning machine is also required to travel on the pool wall. To enable the pool cleaning machine to travel on the pool wall, an improvement is made to the pool cleaning machine by positioning the water outlet on an upper side of the pool cleaning machine. During wall climbing, the pool cleaning machine can be pressed tightly against the pool wall due to a pressure on the pool wall generated by water exiting the water outlet, and then the travel wheels of the machine can be driven by a motor to rotate, thus achieving movement on the pool wall.

During the process of switching from a traveling state to a wall-climbing state, for a PVC pool (or a pool coated with other organic films), which have a higher coefficient of friction relative to the travel wheels, the above-mentioned wall-climbing structure is generally feasible. However, for a tiled pool having a lower coefficient of friction relative to the travel wheels, the above-mentioned wall-climbing structure may slip and spin idle upon wall contact due to the lower coefficient of friction, failing to generate a climbing force along the pool wall and potentially resulting in wall-climbing failure.

Furthermore, to ensure that the front travel wheel (the leading travel wheel in the direction of travel) contacts the pool wall first, the front travel wheel needs to be at least partially located outside the main body of the pool cleaning machine, so as to ensure that the front wheel, instead of the main body, abuts against the pool wall. Therefore, the distance from the front travel wheel to the main body of the pool cleaning machine is increased. Under the constraint of fixed positions of front and rear travel wheels, the volume of the main body of the pool cleaning machine needs to be reduced, which may lead to a reduction in battery volume and motor volume, a smaller impeller, and a smaller cross-sectional area of a water channel, respectively adversely affecting the endurance time length, traveling ability and cleaning ability of the pool cleaning machine (the amount of water cleaned per unit time, and energy consumption due to the greater resistance of a continuous water flow).

Some embodiments of the present application relate to a wall climbing method for an underwater cleaning device, and an underwater cleaning device. When the underwater cleaning device is about to start or has started wall climbing, by controlling the force exerted by the underwater cleaning device on the pool bottom, or adjusting the center of gravity of the underwater cleaning device so that the horizontal distance from its center of gravity to its rear end is less than or equal to the horizontal distance from its center of buoyancy to the rear end, such that the forward end of the underwater cleaning device is slightly lifted or tends to be slightly lifted. After the underwater cleaning device contacts the pool wall, the travel wheel adjacent to the forward end can contact the wall. This enables the underwater cleaning device to climb walls with low coefficients of friction. Alternatively, the underwater cleaning device can perform wall climbing without any need to change the volume of the main body of the underwater cleaning device, and thus is compact in structure with high climbing efficiency.

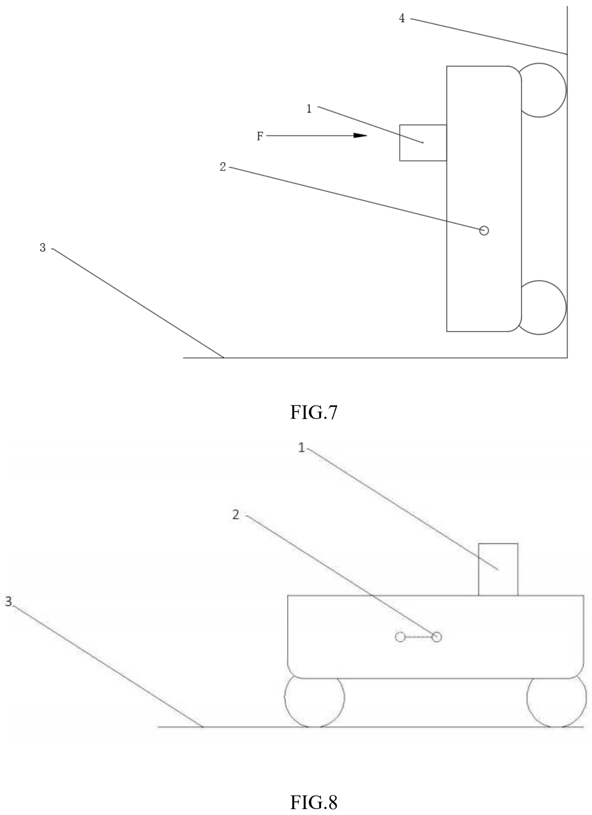

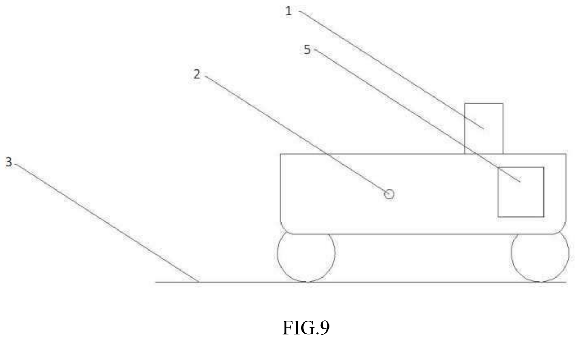

In a wall climbing method for the underwater cleaning device, when the underwater cleaning device is about to start or has started wall climbing, the force exerted by the underwater cleaning device on the pool bottom 3 is reduced, and/or the position of the center of gravity 2 (the position of the center of gravity 2 (a gravity block) in Fig. 8 or the volume of water/air contained in a buoyancy chamber of FIG. 9) is adjusted, so that the forward end of the underwater cleaning device is slightly lifted or tends to be slightly lifted, allowing the travel wheel adjacent to the forward end to better contact the pool wall 4, thereby enabling wall climbing.

The forward end of the underwater cleaning device can be slightly lifted or tend to be slightly lifted by reducing the force exerted by the underwater cleaning device on the pool bottom 3, or by adjusting the position of the center of gravity 2 of the underwater cleaning device, or by both reducing the force exerted by the underwater cleaning device on the pool bottom 3 and adjusting the position of the center of gravity 2 of the underwater cleaning device.

The underwater cleaning device further includes a water inlet disposed on or connected to a housing, a filtering unit disposed inside the housing, and a water outlet disposed on or connected to the housing. Under the action of a driving unit, water enters through the water inlet, and is filtered and then discharged through the water outlet.

Wherein, reducing the force exerted by the underwater cleaning device on the pool bottom 3 includes: reducing the water pressure at the water outlet 1. The water pressure at the water outlet 1 is reduced, thereby reducing the reaction force F of water flowing out through the water outlet 1. Thus, reducing the water pressure on the underwater cleaning device enables the forward end of the underwater cleaning device to be slightly lifted or tend to be slightly lifted.

In one implementation, the water outflow direction of the water outlet is directed vertically upward or inclined. The inclined direction leads to a component that drives the underwater cleaning device in a forward direction and a downward force component applied vertically downward on the device.

The underwater cleaning device includes an impeller connected to the driving unit. Driven by the driving unit, the water flows through the impeller and a water channel, and then is discharged through the water outlet.

Reducing the water pressure at the water outlet 1 includes: reducing a driving force of the driving unit acting on the water at the water outlet 1. Specifically, when regulating and controlling the water pressure at the water outlet 1, the rotational speed of the driving unit connected to the impeller is controlled, so as to control the water pressure at the water outlet 1. The driving unit may be a motor. Reducing the rotational speed of the driving unit leads to a reduction in the flow rate of the water flowing out through the water outlet 1, which reduces the water pressure at the water outlet 1, decreases the reaction force F of the water flowing out through the water outlet 1 , and thus reduces the pressure applied to the underwater cleaning device.

Furthermore, by lowering the voltage/power of the driving unit, the driving force is reduced.

In this embodiment, the driving force of the driving unit acting on the water at the water outlet 1 is reduced by lowering the voltage/power of the driving unit connected to the impeller. The driving unit includes a motor.

The horizontal distance from the center of gravity 2 of the underwater cleaning device to its rear end is less than or equal to the horizontal distance from its center of buoyancy to the rear end. Alternatively, when the underwater cleaning device is about to start or has started wall climbing, the center of gravity 2 of the underwater cleaning device is configured so that the horizontal distance from the center of gravity 2 to its rear end is less than or equal to the horizontal distance from the center of buoyancy to the rear end. Here, the "rear end" refers to a side opposite to the forward end of the underwater cleaning device.

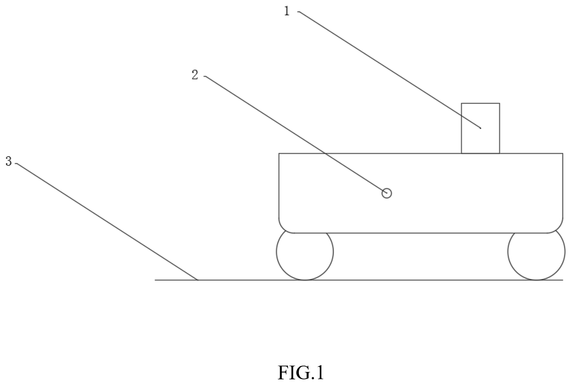

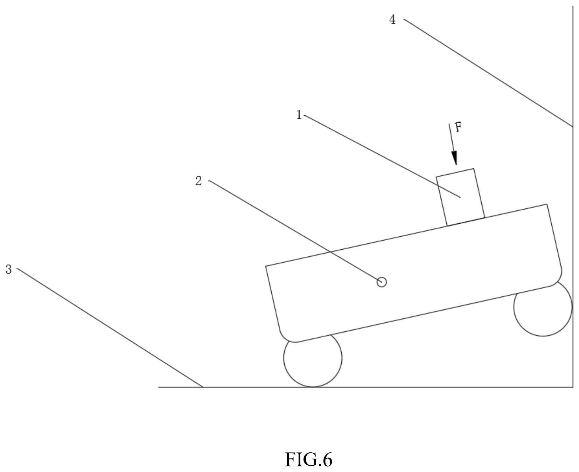

As shown in the FIGS. 1 to 9, the water outflow direction of the water outlet 1 of the underwater cleaning device is directed away from the travel wheels and the bottom of the underwater cleaning device (The inclined outlet is not illustrated in the drawings, it has a component consistent with the water outflow direction shown in the view) (When the underwater cleaning device moves along a traveling surface, the part directly facing the traveling surface is usually a base plate with certain strength and rigidity, which provides a foundation for the direct or indirect installation of components such as the travel wheels, water channels, and motors, etc.). When the horizontal distance from the center of gravity 2 of the underwater cleaning device to its rear end is less than or equal to the horizontal distance from its center of buoyancy to the rear end, the front portion (an end close to the pool wall) of the underwater cleaning device is lighter and the rear portion (an end away from the pool wall) is heavier. After identifying wall climbing requirement, the water pressure at the water outlet 1 is reduced, so that the forward end of the underwater cleaning device is slightly lifted or tends to be slightly lifted. This enables the travel wheel adjacent to the forward end to achieve better contact with the pool wall, thereby performing wall climbing. During the wall climbing, the travel wheels are driven to rotate and travel. The reaction force F of the water at the water outlet 1 leads to a pressure on the underwater cleaning device, thereby maintaining constant contact between the travel wheel adjacent to the forward end and the pool wall 4, and causing the travel wheel away from the forward end to swing toward the pool wall 4.

Furthermore, the above-mentioned identification of the wall climbing requirement can be achieved through detection of sensors (such as an infrared sensor, an acceleration sensor, a gyroscope, etc., for pool wall detection). Then, program (path planning) executable by a controller is used to control whether to perform wall climbing. One program is configured to start wall climbing only upon the Nth pool wall detection. Before (excluding) the Nth pool wall detection, the device does not perform wall climbing but instead only moves on the pool bottom (travels and turns after wall contact).

The vertical axis of the water outlet 1 of the underwater cleaning device is located between the forward end and the rear end of the underwater cleaning device. The vertical axis of the water outlet 1 may be located on a side of the center of gravity 2 where the forward end is located, that is, the vertical axis of the water outlet 1 is between the center of gravity 2 and the forward end. In this case, during wall climbing, the reaction force F of the water flowing out through the water outlet 1 can press the travel wheel adjacent to the forward end tightly against the pool wall 4, so that the underwater cleaning device can climb the wall smoothly. The vertical axis of the water outlet 1 may also be located on the other side of the center of gravity 2. In this case, when the gravity of the underwater cleaning device is sufficient, the travel wheel adjacent to the forward end can also be pressed tightly against the pool wall 4. When controlling the position of the center of gravity 2, the selection is made based on the actual situation of the underwater cleaning device. In this embodiment, preferably, when controlling the position of the center of gravity 2, the vertical axis of the water outlet 1 is located between the center of gravity 2 and the forward end.

In one specific implementation, before the underwater cleaning device contacts the wall, the position of the center of gravity 2 of the underwater cleaning device is adjusted such that the vertical axis of the water outlet 1 of the underwater cleaning device is located between the center of gravity 2 and the forward end of the underwater cleaning device, thereby causing the forward end to be slightly lifted or tend to be slightly lifted. Alternatively, before the underwater cleaning device contacts the wall, the center of gravity 2 of the underwater cleaning device is configured adjacent to the rear end, and the vertical axis of the water outlet 1 of the underwater cleaning device is configured between the center of gravity 2 and the forward end, so that the underwater cleaning device is formed as a front-light and rear-heavy structure. Selections can be made based on the setting of the center of gravity 2 of the underwater cleaning device.

In one implementation, both the front end and the rear end are defined based on the traveling direction of the underwater cleaning device, wherein the leading end in the traveling direction is the front end.

To enable the underwater cleaning device to climb the pool wall 4 smoothly, the method further includes: during the underwater cleaning device climbs the pool wall 4, increasing a pressure exerted by the underwater cleaning device to the pool wall 4, thereby pressing the underwater cleaning device tightly against the pool wall 4, which enhances its force of friction and enables wall climbing.

Wherein, increasing the force exerted by the underwater cleaning device on the pool bottom 4 includes: increasing the water pressure at the water outlet 1, thereby increasing the reaction force F of the water flowing out through the water outlet 1. Thus, the pressure acting on the underwater cleaning device is increased, so that the underwater cleaning device is tightly pressed against the pool wall 4, so as to smoothly climb the wall.

Increasing the water pressure at the water outlet 1 includes: increasing the driving force of the driving unit acting on the water at the water outlet 1. Specifically, when regulating and controlling the water pressure at the water outlet 1, the rotational speed of the driving unit connected to the impeller is controlled, so as to control the water pressure at the water outlet 1. The driving unit may be a motor. Increasing the rotational speed of the driving unit leads to an increase in the flow rate of the water flowing out through the water outlet 1, which increases the water pressure at the water outlet 1, consequently increasing the reaction force F of the water flowing out through the water outlet 1, and thus increasing the pressure applied to the underwater cleaning device.

In this embodiment, the driving force of the driving unit acting on the water at the water outlet 1 is increased by increasing the power of the driving unit connected to the impeller.

After the underwater cleaning device completes the wall climbing, the water pressure at the water outlet 1 is increased (compared to the previously reduced water pressure before the wall climbing), thereby restoring the reaction force of the water flowing out through the water outlet 1, so as to press the underwater cleaning device tightly against the pool wall to enable the device to move along the pool wall 4.

The position of the center of gravity 2 of the underwater cleaning device may be fixedly disposed and the center of gravity 2 may be located adjacent to a side away from the forward end. Alternatively, the center of gravity 2 of the underwater cleaning device is adjustable. After the underwater cleaning device contacts the wall, the center of gravity 2 is adjusted to a position adjacent to the rear end, so that the underwater cleaning device is formed as a front-light and rear-heavy structure (the side facing the pool wall 4 is defined as the forward end (front end), and the opposite side is the rear end). Reducing the rotational speed of the driving unit connected to the impeller reduces the water pressure at the water outlet 1, which reduces the reaction force F of the outflowing water. This reduction in the reaction force reduces the pressure exerted by the outflowing water on the underwater cleaning device, thereby increasing the buoyant force of the underwater cleaning device. Due to the center of gravity 2 of the underwater cleaning device being located adjacent to the rear end, the forward end is slightly lifted or tends to be slightly lifted. During this process, the underwater cleaning device is driven to continue traveling, causing the travel wheel adjacent to the forward end to contact the pool wall 4. The device continues to travel and climb, while the travel wheel adjacent to the rear end swings in a direction toward the pool wall 4, thereby performing wall climbing.

After the travel wheel adjacent to the rear end contacts the pool wall 4, the rotational speed of the driving unit connected to the impeller is increased, the reaction force F of the water flowing out through the water outlet 1 and consequently the pressure exerted on the underwater cleaning device are restored. This pressure presses the underwater cleaning device against the pool wall 4, thereby enabling the underwater cleaning device to travel along and clean the pool wall 4 without falling off the pool wall 4.

The water outlet 1 is disposed at the top of the underwater cleaning device (on a side away from the pool bottom 3 or the pool wall 4) and serves as a water outlet end of the water channel of the underwater cleaning device. Rotation of the impeller drives the filtered water to flow along the water channel and flow out through the water outlet 1. The extension direction of the water outlet 1 is perpendicular to a plane where the plurality of travel wheels are located or has a component in the vertical direction. The reaction force F of the water flowing out through the water outlet 1 acts perpendicularly on the main body of the underwater cleaning device, exerting a pressure on the underwater cleaning device in a direction perpendicular to the plane where the travel wheels are located (perpendicular to the pool bottom 3 or the pool wall 4).

At least one travel wheel of the underwater cleaning device is connected to a first driver, which may be a motor. Herein, the travel wheel adjacent to the forward end is defined as a front wheel, and the travel wheel adjacent to the rear end is defined as a rear wheel. The first driver drives travel wheel connected to it to rotate, thereby driving the underwater cleaning device to travel. During wall climbing, the axis of each travel wheel away from the forward end swings toward the pool wall 4 to facilitate the wall climbing. The first driver may be connected to the front wheel or the rear wheel. Alternatively, a plurality of first drivers are provided, and are connected to both the front wheels and the rear wheels. Selections can be made according to actual needs.

When the center of gravity 2 of the underwater cleaning device is fixedly disposed, the center of gravity 2 of the underwater cleaning device is disposed by adjusting the installation position of each component (the driving unit connected to the impeller). That is, the distance from the center of gravity 2 to one end of the underwater cleaning device is greater than the distance from the center of gravity 2 to the other end of the underwater cleaning device. The device can be configured such that a wall climbing action is enabled only after the lighter end contacts the wall, which contact can be detected by a sensor such as an ultrasonic sensor, an infrared sensor, an acceleration sensor, or a gyroscope, etc. In this case, when the center of gravity is adjusted by adjusting the installation position of the driving unit connected to the impeller, the center of gravity 2 of the underwater cleaning device is mainly determined by the driving unit connected to the impeller. when installing the driving unit connected to the impeller, using the position of the water outlet 1 as a reference, the vertical axis of the water outlet 1 is disposed between the center of gravity 2 and the forward end of the device. The driving unit connected to the impeller is positioned adjacent to the rear end of the device, so that the underwater cleaning device is formed as a front-light and rear-heavy structure.

This configuration with a fixed center of gravity 2 of the underwater cleaning device can be applied to the underwater cleaning device for single-end wall climbing. The underwater cleaning device is formed as a front-light and rear-heavy structure. When it is in a stationary state underwater, the forward end is slightly lifted or tends to be slightly lifted. During travel underwater, under the action of the reaction force F of water flowing out through the water outlet 1, the front wheels and the rear wheels are all in contact with the pool bottom.

When the center of gravity 2 of the underwater cleaning device is adjustably disposed (FIG. 8 or FIG. 9), the center of gravity 2 of the underwater cleaning device is configured to be controlled by a wall-contact actuator assembly that can move relative to the main body of the underwater cleaning device. The position of the center of gravity 2 of the underwater cleaning device is controlled by the movement of the wall-contact actuator assembly (The gravity block moves in coordination with a slide rail, a screw or a swing rod, etc., controlled by a control unit and driven by the driving unit). Alternatively, the center of gravity 2 of the underwater cleaning device is configured to be controlled by a volume-variable wall-contact actuator assembly located on the main body of the underwater cleaning device (The buoyancy chamber is located at the front end of the underwater cleaning device. The position of the center of gravity of the underwater cleaning device is controlled by adjusting the volume of water/air contained in the buoyancy chamber, such as by discharging water, which adjustment is controlled by the control unit and driven by the driving unit). The position of the center of gravity 2 of the underwater cleaning device is controlled by varying the volume of the wall-contact actuator assembly.

In this way, the center of gravity 2 of the underwater cleaning device is adjustably disposed. The position of the center of gravity 2 of the underwater cleaning device can be adjusted according to the position of the forward end, which is suitable for underwater cleaning devices that can climb the wall at both ends or at one end.

Specifically, the above-mentioned wall-contact actuator assembly that can move relative to the main body of the underwater cleaning device includes the gravity block and a guider connected to the gravity block. Under the action of the guider, the gravity block can move relative to the main body of the underwater cleaning device. The guider is disposed along an extension direction from the forward end of the underwater cleaning device to the other end opposite to the forward end, that is, the guider is disposed in the direction from the forward end to the rear end. Driven by the guider, the gravity block can move relative to the main body of the underwater cleaning device. When the underwater cleaning device moves along the pool bottom 3, the gravity block does not move relative to the main body of the underwater cleaning device. When the underwater cleaning device is performing wall climbing, the movement of the gravity block is controlled according to the position of the water outlet 1, and the center of gravity 2 of the underwater cleaning device is adjusted so that the reverse extension line of the water outlet 1 of the underwater cleaning device is located between the center of gravity 2 and the forward end, so that the forward end of the underwater cleaning device is slightly lifted or tends to be slightly lifted.

In this embodiment, the guider may be a lead screw and slider structure, an electrically controlled rail-slider structure, or another structure allowing relative movement of two elements. Selections can be made according to actual requirements.

In this embodiment, the gravity block is a counterweight.

The above-mentioned volume-variable wall-contact actuator assembly includes the buoyancy chamber and a movable member disposed in the buoyancy chamber. The movable member and the buoyancy chamber form a sealed space. The movable member is movable relative to the buoyancy chamber to change the volume of the sealed space, thereby controlling the center of gravity 2 of the underwater cleaning device. The buoyancy chamber has one open end and one closed end, with space inside. The movable member is disposed inside the buoyancy chamber and in contact with an inner wall of the buoyancy chamber, and the movable member is sealingly engaged with the inner wall of the buoyancy chamber, thereby creating a sealed space between the movable member and the closed end. The space between the movable member and the open end is connected to the outside. When the underwater cleaning device is located underwater, the space between the movable member and the open end is filled with water. The volume of the sealed space can be changed by a reciprocating movement of the movable member, thereby enabling water discharge and intake. By varying the volume of the sealed space and the amount of water discharged, the buoyancy at the end where the wall-contact actuator assembly is installed can be changed, thereby changing the weight distribution of the underwater cleaning device and consequently changing the position of the center of gravity 2 of the underwater cleaning device.

The buoyancy chamber is located in front of the center of gravity (in the forward direction of the device) or behind the center of gravity. When the buoyancy chamber is located in front of the center of gravity, the control unit can control an action (such as discharging water), to cause the forward end to be slightly lifted or to lift. When the buoyancy chamber is located behind the center of gravity, the control unit can control an action (such as filling with water), to cause the forward end to be slightly lifted or to lift. Preferably, the buoyancy chamber is located in front of the center of gravity.

The movable member may be connected to a second driver through a transmission member. The second driver may be a motor. The transmission member is a crank-slider mechanism or a lead screw drive mechanism. Alternatively, the movable member may be connected to the driving unit, connected to the impeller, via the transmission member. In such a configuration, the transmission member may be a rack and pinion mechanism or other arrangements, selected based on actual requirements, with no specific limitation imposed herein.

During installation, the volume-variable wall-contact actuator assembly may be installed at the forward end of the main body of the underwater cleaning device and the other end opposite to the forward end. By controlling the volume and the amount of discharged water of the volume-variable wall-contact actuator assembly, the position of the center of gravity 2 of the underwater cleaning device can be changed. Alternatively, the volume-variable wall-contact actuator assembly is slidably provided along an extension direction from the forward end of the main body of the underwater cleaning device to the other end opposite to the forward end. The volume-variable wall-contact actuator assembly may be mounted via a lead screw drive mechanism or a guide rail structure. The position of the center of gravity 2 of the underwater cleaning device is controlled by controlling the position of the volume-variable wall-contact actuator assembly and the volume and the amount of discharged water of the sealed buoyancy chamber. The volume-variable wall-contact actuator assembly may also be implemented in other configurations, selected according to actual requirements.

After the underwater cleaning device contacts the wall, it is determined whether the vertical axis of the water outlet 1 is located between the center of gravity 2 and the forward end. If so, a wall-climbing action is executed to climb the wall. Otherwise, the wall-contact actuator assembly capable of moving relative to the main body of the underwater cleaning device or the volume-variable wall-contact actuator assembly acts, the gravity block or the movable member moves, and the position of the center of gravity 2 of the underwater cleaning device is adjusted according to the position of the water outlet 1, so that the vertical axis of the water outlet 1 is located between the center of gravity 2 and the forward end. Then, the wall-climbing action is executed to climb the wall.

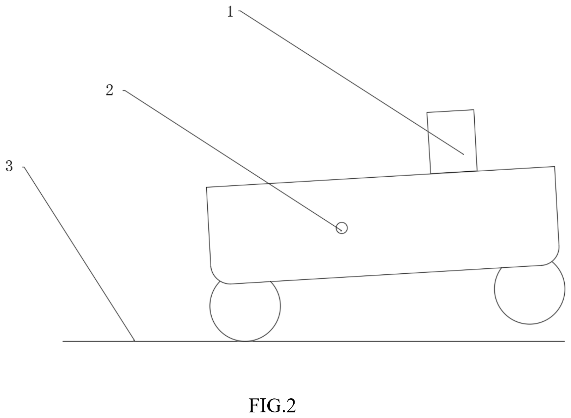

When the underwater cleaning device is in a stationary state underwater, as shown in FIGS. 1 and 2, the forward end is slightly lifted away from the pool bottom 3 or tends to be slightly lifted. Alternatively, both the forward end and the rear end remain on the pool bottom 3, but the center of gravity 2 of the underwater cleaning device is close to the rear end, and the underwater cleaning device has a front-light and rear-heavy structure.

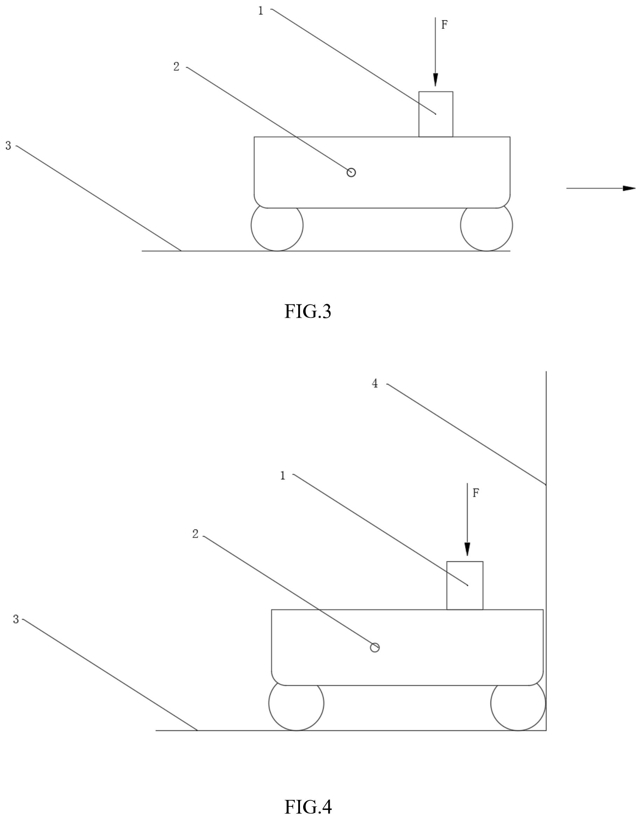

When the underwater cleaning device is in a traveling state underwater, as shown in FIG. 3, the water outlet 1 is located on the upper side, the reaction force F of water flowing out through the water outlet 1 acts on the underwater cleaning device, and further under the action of its own gravity in water, the underwater cleaning device travels along the pool bottom 3, performing cleaning.

When the underwater cleaning device contacts the wall, as shown in FIG 4, the travel wheel adjacent to the forward end of the underwater cleaning device is exposed above the main body of the underwater cleaning device and comes into contact with the pool wall 4.

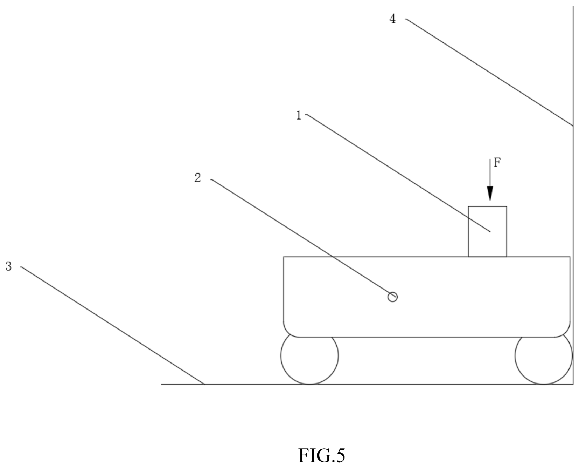

When the underwater cleaning device contacts the wall and then performs wall climbing, as shown in FIGS. 5 to 7, reducing the rotational speed of the driving unit connected to the impeller reduces the water pressure at the water outlet 1, thereby reducing the reaction force F of the water flowing out through the water outlet 1, the forward end of the underwater cleaning device is slightly lifted. Alternatively, the wall-contact actuator assembly acts and controls the water outlet 1 of the underwater cleaning device to be located between the center of gravity 2 and the forward end. Under the action of buoyancy, the forward end of the underwater cleaning device is slightly lifted. During the slight lifting, it is lifted upward by a small distance, the travel wheel adjacent to the forward end is lifted, the travel wheel adjacent to the rear end remains unchanged in height, the underwater cleaning device as a whole is in a front-high and rear-low tilted state, the travel wheel adjacent to the forward end swings upward by a slight angle, enabling the travel wheel adjacent to the forward end to better protrude from the main body of the underwater cleaning device and abut against the pool wall 4 and to be pressed tightly against the pool wall 4 under the action of the reaction force F of the water flowing out through the water outlet 1.

Under the driving action of the first driver connected to the travel wheel, the travel wheel adjacent to the forward end continues to rotate and climb, an axis of the travel wheel adjacent to the rear end gradually swings toward the pool wall 4, until the travel wheel adjacent to the rear end also abuts against the pool wall 4, thereby completing the switch from a travel state to a wall-climbing state.

Increasing the rotational speed of the driving unit connected to the impeller increases the water pressure at the water outlet 1, thereby restoring the reaction force F of the water flowing out through the water outlet 1. Under the action of the reaction force F of the water flowing out through the water outlet 1 acting on the underwater cleaning device, the underwater cleaning device is pressed tightly against the pool wall 4, so as to enable the underwater cleaning device to travel along the pool wall 4.

An underwater cleaning device is provided, which is configured to perform wall climbing using the above-mentioned method.

The underwater cleaning device includes a wall-contact identification unit and a control unit. The wall-contact identification unit is electrically connected to the control unit. The control unit receives a detection signal from the wall-contact identification unit, and then controls a driving unit of the underwater cleaning device to act.

In response to identifying that the device contacts and is about to climb the pool wall 4, the wall-contact identification unit sends a signal to the control unit, so that the control unit issues a command to the driving unit to reduce the water pressure at the water outlet 1, and thus reduce the force exerted by the underwater cleaning device on the pool bottom 3, thereby achieving wall climbing.

When the underwater cleaning device completes a wall climbing initiation action and starts wall climbing, the control unit issues the command to the driving unit, to increase the water pressure at the water outlet 1 and thus increase the force exerted by the underwater cleaning device on the pool bottom 3, thereby achieving wall climbing.

The above-mentioned wall-contact identification unit is a sensor, which may be an infrared sensor, a gyroscope, or an acceleration sensor.

Issuing the command by the control unit to the driving unit to cause the forward end of the underwater cleaning device to be slightly lifted or tend to be slightly lifted includes at least one of:

issuing the command by the control unit to the driving unit, to reduce the water pressure at the water outlet 1 and thus reduce the force exerted by the underwater cleaning device on the pool bottom;

issuing the command by the control unit to the driving unit, to adjust the center of gravity 2 of the underwater cleaning device such that the horizontal distance from the center of gravity 2 to the rear end to be less than or equal to the horizontal distance from the center of buoyancy to the rear end.

The center of gravity 2 of the underwater cleaning device is configured to be close to a side opposite to the forward end, the vertical axis of the water outlet 1 is located between the center of gravity 2 and the forward end, so that the underwater cleaning device is formed as a front-light and rear-heavy structure. In this case, the center of gravity 2 of the underwater cleaning device is configured to be controlled by an installation position of the driving unit connected to the impeller. Before the underwater cleaning device contacts the wall and after the underwater cleaning device contacts the wall, the forward end of the underwater cleaning device is slightly lifted or tends to be slightly lifted.

Alternatively, during wall climbing, the center of gravity 2 of the underwater cleaning device is adjusted to be close to the side opposite to the forward end, such that the vertical axis of the water outlet 1 is located between the center of gravity 2 and the forward end. Therefore, after the underwater cleaning device contacts the wall, the forward end of the underwater cleaning device is slightly lifted or tends to be slightly lifted.

Due to the adoption of the above-mentioned technical solution, after the underwater cleaning device contacts the wall, reducing the force exerted by the underwater cleaning device on the pool bottom, such that the forward end of the underwater cleaning device is slightly lifted or tends to be slightly lifted, so as to perform wall climbing. By adjusting the center of gravity of the underwater cleaning device, the horizontal distance from the center of gravity of the underwater cleaning device to the rear end is controlled to be less than or equal to the horizontal distance from the center of buoyancy to the rear end, so that the underwater cleaning device is formed as a front-light and rear-heavy structure, so as to enable the forward end of the underwater cleaning device to be slightly lifted or tend to be slightly lifted. In this way, after the underwater cleaning device contacts the wall, the travel wheel adjacent to the forward end can be exposed above the main body of the underwater cleaning device to contact the pool wall, to perform wall climbing. During wall climbing, by reducing the water pressure at the water outlet, combined with rotation of the travel wheels, the underwater cleaning device can successfully climb onto the pool wall (such as tiles) with a relatively low coefficient of friction. After wall climbing is completed, the water pressure at the water outlet is restored. The underwater cleaning device can travel along the pool wall, have high wall climbing efficiency and a compact structure, enabling the travel wheels to be retracted inward (the vertical center line of the main body of the underwater cleaning device), so as to ensure that for a predetermined volume, more installation space can be provided, to arrange a battery, a motor, a transmission means (between the motor and the impeller) and an impeller with a larger volume, and a flow channel with a larger lateral dimension, to respectively improving an endurance time length, travel ability and cleaning ability (the amount of water cleaned per unit time, and energy consumption due to the greater resistance of a continuous water flow).

The above embodiments of the present application have been described in detail, but the described contents are only preferred embodiments of the present application, and cannot be considered for limiting the range of implementation in the present application. Any equivalent changes or modifications made based on the scope of the present application shall still fall within the protection scope of the present application.

## Claims

1. A wall climbing method for an underwater cleaning device, wherein water is discharged from a water outlet of the underwater cleaning device after being filtered by the underwater cleaning device; when the underwater cleaning device is about to start or has started wall climbing, a forward end is caused to be slightly lifted or tend to be slightly lifted.

2. The wall climbing method according to claim 1, wherein causing the forward end to be slightly lifted or tend to be slightly lifted is implemented by at least one of:
reducing a force exerted by the underwater cleaning device on a pool bottom; and
causing a horizontal distance from a center of gravity of the underwater cleaning device to a rear end of the underwater cleaning device to be less than or equal to a horizontal distance from a center of buoyancy to the rear end.

3. The wall climbing method according to claim 2, wherein reducing the force exerted by the underwater cleaning device on the pool bottom comprises: reducing a water pressure at the water outlet.

4. The wall climbing method according to claim 3, wherein reducing the water pressure at the water outlet comprises: reducing a driving force of a driving unit acting on water at the water outlet.

5. The wall climbing method according to claim 2, wherein the horizontal distance from the center of gravity of the underwater cleaning device to the rear end is less than or equal to the horizontal distance from the center of buoyancy to the rear end; or
when the underwater cleaning device is about to start or has started wall climbing, the horizontal distance from the center of gravity to the rear end is less than or equal to the horizontal distance from the center of buoyancy to the rear end.

6. The wall climbing method according to claim 1, wherein the water outlet is arranged so that its axis has a vertical component located between a center of gravity of the underwater cleaning device and the forward end.

7. The wall climbing method according to claim 1, further comprising: when the underwater cleaning device performs wall climbing, increasing a pressure exerted by the underwater cleaning device on a pool wall, thereby achieving wall climbing.

8. The wall climbing method according to claim 7, wherein increasing the pressure exerted by the underwater cleaning device on the pool wall comprises: increasing a water pressure at the water outlet.

9. The wall climbing method according to claim 8, wherein increasing the water pressure at the water outlet comprises: increasing a driving force of a driving unit acting on water at the water outlet.

10. The wall climbing method according to claim 2, wherein, when the underwater cleaning device is about to start or has started wall climbing, causing the horizontal distance from the center of gravity of the underwater cleaning device to the rear end to be less than or equal to the horizontal distance from the center of buoyancy to the rear end comprises any one of:
configuring the center of gravity of the underwater cleaning device so that the horizontal distance from the center of gravity to the rear end is less than or equal to the horizontal distance from the center of buoyancy to the rear end; and
when the underwater cleaning device is about to start or has started wall climbing, adjusting the center of gravity of the underwater cleaning device so that the horizontal distance from the center of gravity to the rear end is less than or equal to the horizontal distance from the center of buoyancy to the rear end.

11. The wall climbing method according to claim 10, wherein adjusting the center of gravity of the underwater cleaning device so that the horizontal distance from the center of gravity to the rear end is less than or equal to the horizontal distance from the center of buoyancy to the rear end comprises any one of:
providing a movable gravity block in a housing of the underwater cleaning device, and driving the gravity block to move by a driving assembly; and
providing a buoyancy chamber in the housing of the underwater cleaning device, and driving the buoyancy chamber to discharge or take in water by the driving assembly.

12. An underwater cleaning device, wherein the underwater cleaning device is configured to perform wall climbing using the wall climbing method according to any one of claims 1 to 11.

13. The underwater cleaning device according to claim 12, comprising: a wall-contact identification unit and a control unit;
wherein the wall-contact identification unit is configured to:
in response to identifying that the underwater cleaning device contacts a wall and is about to start or has started wall climbing, send a signal to the control unit so that the control unit issues a command to a driving unit, to cause the forward end of the underwater cleaning device to be slightly lifted or tend to be slightly lifted, thereby achieving wall climbing.

14. The underwater cleaning device according to claim 13, wherein issuing the command by the control unit to the driving unit to cause the forward end of the underwater cleaning device to be slightly lifted or tend to be slightly lifted comprises at least one of:
issuing the command by the control unit to the driving unit, to reduce a water pressure at the water outlet and thus reduce a force exerted by the underwater cleaning device on a pool bottom; and
issuing the command by the control unit to the driving unit, to adjust a horizontal distance from a center of gravity of the underwater cleaning device to a rear end of the underwater cleaning device to be less than or equal to a horizontal distance from a center of buoyancy to the rear end.

15. The underwater cleaning device according to claim 13, wherein the control unit is further configured to:
when the underwater cleaning device completes a wall climbing initiation action and starts wall climbing, issue the command to the driving unit to increase a water pressure at the water outlet and thus increase a force exerted by the underwater cleaning device on a pool bottom.

16. The underwater cleaning device according to claim 12, further comprising: a water inlet disposed on or connected to a housing, a filtering unit disposed inside the housing, and a water outlet disposed on or connected to the housing, wherein, under an action of the driving unit, water enters through the water inlet, is filtered and then discharged through the water outlet.
